# EUROPÄISCHE PATENTSCHRIFT

(11) **EP 4 461 599 B1**
(45) Veröffentlichungstag und Bekanntmachung des Hinweises auf die Patenterteilung: **11.06.2025**
(21) Anmeldenummer: 23172230.7
(22) Anmeldetag: 09.05.2023
(51) Int. Cl.: B60P 7/08, B64D 9/00, B61D 45/00, B64C 1/20, B64D 11/06

(54) **BESCHLAG ZUM FESTLEGEN VON LADUNGSSTÜCKEN**
FITTING FOR FIXING LOAD ELEMENTS
FERRURE POUR FIXER DES ÉLÉMENTS DE CHARGE

(43) Veröffentlichungstag der Anmeldung: 13.11.2024
(73) Patentinhaber: WISTRA GmbH Cargo Control, 23923 Selmsdorf (DE)
(72) Erfinder: Birenheide, Christian, 23919 Berkenthin (DE)
(74) Vertreter: Patentanwälte Hemmer Lindfeld Frese Partnerschaft mbB

(56) Entgegenhaltungen:
- EP-B1- 3 000 655
- DE-U1- 20 302 929
- DE-U1- 20 305 485
- US-A- 3 782 295
- US-A1- 2020 269 936

## Beschreibung

Die vorliegende Erfindung betrifft einen Beschlag zum Festlegen von Ladungsstücken an einer Sicherungsschiene auf einer Ladefläche eines Fahrzeugs sowie ein System aus einer Sicherungsschiene und einem entsprechenden Beschlag.

Zum Arretieren bzw. Festlegen von Ladungsgütern auf Ladeflächen von Fahrzeugen, wie beispielsweise LKWs, sind eine Vielzahl von unterschiedlichen Vorrichtungen und Systemen bekannt. Insbesondere für Rollcontainer ist aus dem europäischen Patent EP 3 000 655 B1 eine Vorrichtung zum Festlegen von Ladungsgegenständen auf der Ladefläche eines LKWs bekannt. Die Vorrichtung umfasst einen Beschlag, der das Profil einer Schiene umgreift. Hierzu umfasst der Beschlag zwei Abschnitte, die relativ zueinander beweglich sind. Die beiden Abschnitte umschließen das Profil der Schiene auf gegenüberliegenden Seiten und können mittels eines Hebels aufeinander zubewegt werden. Beim Schließen des Hebels wird der Beschlag über einen Reibschluss zwischen den beiden Abschnitten des Beschlags und dem Profil der Schiene in Längsrichtung der Schiene an selbiger festgelegt.

DE 203 05 485 U1 offenbart einen Beschlag zur Sicherung eines Ladungsguts an einer Sicherungsschiene. Der Beschlag verfügt über eine Hebelanordnung, mittels derer ein Rastelement in Rastöffnungen an der Sicherungsschiene hineinbewegt werden kann. Die Hebelanordnung verrastet an dem Beschlag, um den Beschlag an der Sicherungsschiene festzulegen.

DE 203 02 929 U1 offenbart einen zweiteiligen Beschlag, mit dem Ladungsstücke an einer Airlineschiene festgelegt werden können. Der zweiteilige Beschlag umfasst einen ersten Teil, der an den Rastöffnungen der Airlineschiene festgelegt wird. An dem ersten Teil ist eine Zahnung ausgebildet, über die die Position eines zweiten Teils des Beschlags relativ zu dem ersten Teil eingestellt werden kann.

Vor diesem Hintergrund ist es eine Aufgabe der vorliegenden Erfindung, einen verbesserten Beschlag sowie ein verbessertes System zum Festlegen von Ladungsstücken auf einer Ladefläche eines Fahrzeugs bereitzustellen.

Diese Aufgabe wird gelöst durch einen Beschlag gemäß Anspruch 1 sowie ein System aus einem Beschlag und einer Sicherungs-

Die Sicherungsschiene erstreckt sich in einer Längsrichtung, die beispielsweise bei einer an einer Wandung montierten Sicherungsschiene parallel zur Wandung verläuft. Bei einer horizontal an einer Bordwand montierten Sicherungsschiene verläuft die Längsrichtung zudem parallel zum Boden der Ladefläche des Fahrzeugs.

Die Sicherungsschiene weist zwei Kanten auf, die sich ebenfalls entlang der Längsrichtung erstrecken. Die Kanten sind vorzugsweise jeweils an einer Auskragung der Sicherungsschiene ausgebildet, wobei sich die Auskragungen in entgegengesetzten Richtungen zueinander erstrecken, d.h., sie können beispielsweise aufeinander zuweisen oder voneinander wegweisen. In einer beispielhaften bevorzugten Ausführungsform weisen die beiden Auskragungen, an denen die beiden Kanten ausgebildet sind, voneinander weg. Beispielsweise kann die die erste Kante ausbildende Auskragung bei einer horizontal an einer Wand des Fahrzeugs befestigten Sicherungsschiene von der Ladefläche des Fahrzeugs wegweisen, während die die zweite Kante ausbildende Auskragung auf die Ladefläche zuweist.

Der erfindungsgemäße Beschlag ist dazu vorgesehen, mit den beiden Kanten an der Sicherungsschiene einzugreifen. Hierzu weist der Beschlag zwei gegenüberliegende Eingriffsabschnitte auf, von denen jeweils einer an einer der beiden Kanten eingreift und teilweise umschließt. Die Eingriffsabschnitt sind zum Eingriff mit der jeweiligen Kante ausgebildet ist. Beispielsweise können die Eingriffsabschnitte langgestreckte, hakenförmige Profile sein, die hinter die erste Kante und zweite Kante hinterhaken.

Um den Beschlag an einer Sicherungsschiene festzulegen, weist dieser eine Spanneinrichtung auf. Die Spanneinrichtung ist beispielsweise an oder teilweise in einem Grundkörper des Beschlags ausgebildet, an dem der erste Eingriffsabschnitt und der zweite Eingriffsabschnitt angeordnet sind. Die Spanneinrichtung ist so aufgebaut, dass sie zum Arretieren des Beschlags an der Sicherungsschiene den Beschlag von der Sicherungsschiene weg in einer Spannrichtung spannt, d.h., von der Sicherungsschiene wegdrückt. Ist die Sicherungsschiene beispielsweise an einer Wand eines Fahrzeugs befestigt, kann die Spanneinrichtung so ausgestaltet sein, dass sie den Beschlag senkrecht zu der Wand von dieser wegdrückt.

Durch das Wegdrücken des Beschlags von der Spanneinrichtung werden Eingriffsabschnitte gegen die erste Kante und die zweite Kante der Sicherungsschiene gedrückt. Dabei ist der zweite Eingriffsabschnitt so ausgebildet, dass er in Zusammenwirken mit der zweiten Kante der Sicherungsschiene eine Verschiebung des Beschlags relativ zu der Sicherungsschiene erzeugt, die dazu führt, dass der erste Eingriffsabschnitt auf die erste Kante der Sicherungsschiene zubewegt wird. Weist beispielsweise bei einer an einer Wand befestigten Sicherungsschiene die erste Kante von der Ladefläche des Fahrzeugs weg und die zweite Kante weist auf die Ladefläche zu, so ist der zweite Eingriffsabschnitt so ausgebildet, dass durch das Wegdrücken des Beschlags von der Sicherungsschiene der Beschlag insgesamt auf die Ladefläche zubewegt wird. Hierdurch wird der erste Eingriffsabschnitt auf die erste Kante zu bewegt und damit ein an dem ersten Eingriffsabschnitt ausgebildetes Positionieren in einer Positionierhilfe hineingedrückt, die an der ersten Kante geformt ist. Das Zusammenwirken von Positioniermittel und Positionierhilfe sorgt dafür, dass der Beschlag in Längsrichtung an der Sicherungsschiene arretiert wird, indem vorzugsweise ein Formschluss zwischen dem Positioniermittel und der Positionierhilfe hergestellt bzw. gesichert wird.

Damit stellt der vorliegende Beschlag eine einfache Möglichkeit dar, ein Ladungsgut an einer Sicherungsschiene auf der Ladefläche eines Fahrzeugs festzulegen. Dabei wird auf vorteilhafte Weise die Bewegung senkrecht zur Sicherungsschiene in eine transversale Bewegung übersetzt, die zu einer robusten Verbindung von Positioniermittel und Positionierhilfe führt. Dadurch wird der Beschlag an der Sicherungsschiene nicht nur wie im Stand der Technik durch einen Reibschluss festgelegt. Vielmehr kommt es zu einem Formschluss, der eine zuverlässige und sichere Positionierung der Ladungsstücke auf der Ladefläche des Fahrzeugs gegen Bewegungen parallel zur Längsrichtung der Sicherungsschiene ermöglicht.

In einer bevorzugten Ausführungsform ist das Positioniermittel in Form eines Vorsprungs ausgebildet, der dazu vorgesehen ist, in eine korrespondierende Ausnehmung an der ersten Kante einzugreifen, wobei die Ausnehmung die Positionierhilfe bildet. Der Vorsprung an dem ersten Eingriffsabschnitt kann beispielsweise durch einen Bolzen gebildet werden, der in den Eingriffsabschnitt eingesetzt wird. Dies kann beispielsweise dann sinnvoll sein, wenn der Eingriffsabschnitt selbst aus einem Kunststoff hergestellt ist, in den ein Bolzen aus einem Metall eingesetzt wird. Die korrespondierende Ausnehmung an der ersten Kante ist entsprechend von invertierter Form, sodass ein Formschluss zwischen dem Vorsprung und der Ausnehmung möglich ist, die den Beschlag in Längsrichtung festlegt.

In einer bevorzugten Ausführungsform ist zum Eingriff des zweiten Eingriffsabschnitts mit der zweiten Kante am zweiten Eingriffsabschnitt eine beschlagseitige Anlagefläche ausgebildet, die sich in einer Ebene erstreckt, die parallel zur Längsrichtung verläuft und unter einem Winkel von weniger als 90° zur Spannrichtung geneigt ist. In der bevorzugten Ausführungsform ist damit eine Anlagefläche am Beschlag vorgesehen, die Teil des zweiten Eingriffsabschnitts ist. Diese Anlagefläche liegt bei einem mit einer Sicherungsschiene verbundenen Beschlag an der zweiten Kante an und verläuft in einer Ebene, die einerseits parallel zur Längsrichtung verläuft und andererseits unter einem Winkel von weniger als 90° zur Spannrichtung geneigt ist. Da die Ebene zur Spannrichtung geneigt ist, verläuft sie auch nicht parallel zur Spannrichtung. Die Anlagefläche kann beispielsweise in einer Ausführungsform, in der die zweite Kante von der ersten Kante wegweist, also beispielsweise auf die Ladefläche zuweist, wenn die Sicherungsschiene an einer Bordwand eines Fahrzeugs befestigt ist, auf die Bordwand derart zugeneigt sein, dass sie eine Gleitfläche bildet. Wird nun durch die Spanneinrichtung der Beschlag von der Sicherungsschiene weggedrückt, gleitet der Beschlag auf der beschlagseitigen Anlagefläche in Richtung auf die Ladefläche des Fahrzeugs zu. Durch diese senkrechte Bewegung zur Spannrichtung wird der erste Eingriffsabschnitt auf die erste Kante der Sicherungsschiene zubewegt und das Positioniermittel in der Positionierhilfe festgelegt.

In einer bevorzugten Ausführungsform wird die Spanneinrichtung von einer Hebelanordnung und einem Spannelement gebildet, wobei das Spannelement über die Hebelanordnung in Kontakt mit der Sicherungsschiene gebracht werden kann, um den Beschlag von der Sicherungsschiene weg in der Spannrichtung zu spannen. Beispielsweise kann das Spannelement durch die von einem Bediener zu betätigende Hebelanordnung gegen der Spannrichtung auf die Sicherungsschiene zubewegt und gegen diese gedrückt werden. Sobald das Spannelement an der Sicherungsschiene anliegt, wird der Beschlag von der Sicherungsschiene weggedrückt und damit die erfindungsgemäße Verschiebung des Beschlags senkrecht zur Spannrichtung erzeugt, die das Positioniermittel in der an der ersten Kante ausgebildeten Positionierhilfe festlegt.

Vorzugsweise wird das Spannelement von einem Bolzen gebildet, der beim Verschwenken eines Hebels der Hebelanordnung von einer Öffnungsstellung in eine Schließstellung durch einen Kontakt mit einer exzentrischen Oberfläche der Hebelanordnung entgegen der Spannrichtung auf die Sicherungsschiene zubewegt wird. In der bevorzugten Ausführungsform ist damit ein Hebel vorgesehen, der beispielsweise um eine Hebelachse zwischen einer Öffnungsstellung und einer Schließstellung verschwenkt werden kann. Eine exzentrisch um die Schwenkachse verlaufende Oberfläche des Hebels liegt dabei an dem Spannelement an, das von einem Bolzen gebildet wird und bewegt dieses Spannelement beim Verschwenken des Hebels in die Schließstellung auf die Sicherungsschiene zu. Diese Bewegung erfolgt gegen die Spannrichtung, also bei einer an einer Wandung eines Fahrzeugs befestigten Sicherungsschiene auf die Wandung zu. Die Verwendung eines Hebels bzw. einer Hebelanordnung ermöglicht damit auf vorteilhafte Weise einem Bediener hohe Kräfte zum Festlegen des Beschlags an der Sicherungsschiene aufzubringen, ohne das hierfür auf Seiten des Bedieners große Kräfte notwendig sind.

Es ist weiterhin bevorzugt, wenn das Spannelement mittels eines Federelements in Spannrichtung vorgespannt ist, sodass das Spannelement von der Sicherungsschiene wegbewegt wird, wenn der Hebel der Hebelanordnung von der Schließstellung in die Öffnungsstellung verschwenkt wird. Mithin ist vorzugsweise vorgesehen, dass ein Federmittel, beispielsweise eine Spiralfeder, das Spannelement wieder in seiner Ausgangsposition zurückbewegt, wenn die Hebelanordnung in die Öffnungsstellung verschwenkt wird. Das Federelement erleichtert damit auf vorteilhafte Weise, den Beschlag von der Sicherungsschiene wieder zu lösen.

Weiterhin ist es bevorzugt, wenn der erste Eingriffsabschnitt zum Eingriff mit der ersten Kante eine beschlagseitige Anlagefläche aufweist, die sich in einer senkrecht zur Spannrichtung verlaufenden Ebene erstreckt. Die beschlagseitige Anlagefläche am ersten Eingriffsabschnitt ist damit so ausgebildet, dass sie senkrecht zu der Kraft verläuft, mit der der Beschlag von der Sicherungsschiene weggedruckt wird. Damit sichert die beschlagseitige Anlagefläche am ersten Eingriffsabschnitt den Beschlag gegen Bewegungen von der Sicherungsschiene weg.

In einer weiteren bevorzugten Ausführungsform sind der erste Eingriffsabschnitt und der zweite Eingriffsabschnitt über einen Mittelabschnitt fest miteinander verbunden. Hierzu können die Eingriffsabschnitt und der Mittelabschnitt beispielsweise einstückig ausgebildet sein. Durch eine feste bzw. steife Verbindung zwischen dem ersten Eingriffsabschnitt und dem zweiten Eingriffsabschnitt wird sichergestellt, dass durch die von dem Zusammenwirken zwischen dem zweiten Eingriffsabschnitt und der zweiten Kante der Sicherungsschiene erzeugte Transversalbewegung vollständig auf den ersten Eingriffsabschnitt übertragen und damit der Beschlag sicher entlang der Längsrichtung der Sicherungsschiene festgelegt wird.

Weiterhin ist vorzugsweise vorgesehen, dass der erste Eingriffsabschnitt eine Mehrzahl von Positioniermitteln aufweist, die so ausgebildet sind, dass beim Spannen des Beschlags in der Spannrichtung sämtliche Positioniermittel in korrespondierende Positionierhilfe an der Sicherungsschiene hineingedrückt werden. Durch das Vorsehen mehrerer Positioniermittel am Eingriffsabschnitt und mehrerer korrespondierender Positionierhilfen an der Sicherungsschiene wird ein mehrfacher Formschluss zwischen dem Beschlag und der Sicherungsschiene erreicht und der Beschlag zuverlässig in Längsrichtung an der Sicherungsschiene festgelegt.

In einem zweiten Aspekt betrifft die vorliegende Erfindung ein System aus einer Sicherungsschiene und einem Beschlag gemäß einer der vorstehend beschriebenen Ausführungsformen. Die sich in einer Längsrichtung erstreckende Sicherungsschiene weist eine erste Kante und eine zweite Kante auf. Die erste Kante und die zweite Kante verlaufen parallel zur Längsrichtung. Vorzugsweise ist die erste Kante an einer ersten Auskragung ausgebildet, die sich relativ zu einer zweiten Auskragung erstreckt, an der die zweite Kante ausgebildet ist.

Die Vorteile des Systems entsprechen im Wesentlichen den Vorteilen der Ausführungsform des Beschlags, der als Teil des Systems verwendet wird.

In einer bevorzugten Ausführungsform ist zum Eingriff des zweiten Eingriffsabschnitts mit der zweiten Kante der Sicherungsschiene an der Sicherungsschiene eine schienenseitige Anlagefläche ausgebildet, die parallel zur Längsrichtung verläuft unter einem Winkel von mehr als 90° zur Spannrichtung geneigt ist. Ergänzend oder alternativ zu der beschlagseitigen Anlagefläche an dem zweiten Eingriffsabschnitt ist damit an der Sicherungsschiene an der zweiten Kante eine schienenseitige Anlagefläche ausgebildet, die die gleiche Funktion hat. Diese Anlagefläche verläuft ebenfalls parallel zur Längsrichtung und ist unter einem Winkel von mehr als 90° zur Spannrichtung geneigt, sodass beim Spannen des Beschlags von der Sicherungsschiene weg der zweite Eingriffsabschnitt an der schienenseitigen Anlagefläche entlanggleitet und die Bewegung des Beschlags in Spannrichtung in eine Bewegung senkrecht dazu umgesetzt wird. Diese Bewegung sorgt dafür, dass der Beschlag ortsfest durch den Eingriff des Positioniermittels mit der Positionierhilfe festgelegt wird.

Vorzugsweise sind sowohl die schienenseitige Anlagefläche an der zweiten Kante als auch die beschlagseitige Anlagefläche am zweiten Eingriffsabschnitt um den gleichen Winkel verkippt, sodass die parallel zueinander verlaufen und damit korrespondierende Gleitflächen bilden.

Schließlich ist gemäß einer bevorzugten Ausführungsform vorgesehen, dass die erste Kante eine Vielzahl von Positionierungshilfen aufweist, die vorzugsweise gleichmäßig voneinander beabstandet in der Längsrichtung entlang der ersten Kante ausgebildet sind. Die vielen, entlang der ersten Kante verteilten Positionierungshilfen können dabei beispielsweise Ausnehmungen sein, deren Form der an dem ersten Eingriffsabschnitt ausgebildeten Vorsprüngen entspricht. Durch eine Vielzahl von Positionierungshilfen kann der Beschlag an einer Vielzahl von Orten entlang der Sicherungsschiene flexible verschoben werden.

Nachfolgend wird die Erfindung bezugnehmend auf die ein Ausführungsbeispiel eines Systems aus einer Sicherungsschiene und einem Ausführungsbeispiel eines Beschlags zeigenden Zeichnungen näher erläutert, dabei zeigt
- Figur 1: eine perspektivische Ansicht eines Systems aus einer Sicherungsschiene und einem Ausführungsbeispiel eines Beschlags,
- Figur 2: eine perspektivische Ansicht eines Beispiels einer Sicherungsschiene,
- Figur 3: eine Draufsicht auf das Ausführungsbeispiel aus Figur 1, wobei der Beschlag an der Sicherungsschiene festgelegt ist,
- Figur 4: eine Schnittansicht durch Figur 3 entlang der Linie A-A,
- Figur 5: eine Draufsicht auf das Ausführungsbeispiel aus Figur 1, wobei der Beschlag nicht an der Sicherungsschiene festgelegt ist,
- Figur 6: eine Schnittansicht durch Figur 5 entlang der Linie A-A,
- Figur 7: eine seitliche Ansicht des Systems aus Figur 1,
- Figur 8: eine Schnittansicht durch das Ausführungsbeispiel aus Figur 7 entlang der Linie B-B,
- Figur 9: eine seitliche Ansicht des Systems aus Figur 1, bei dem der Beschlag teilweise mit der Sicherungsschiene verbunden ist.

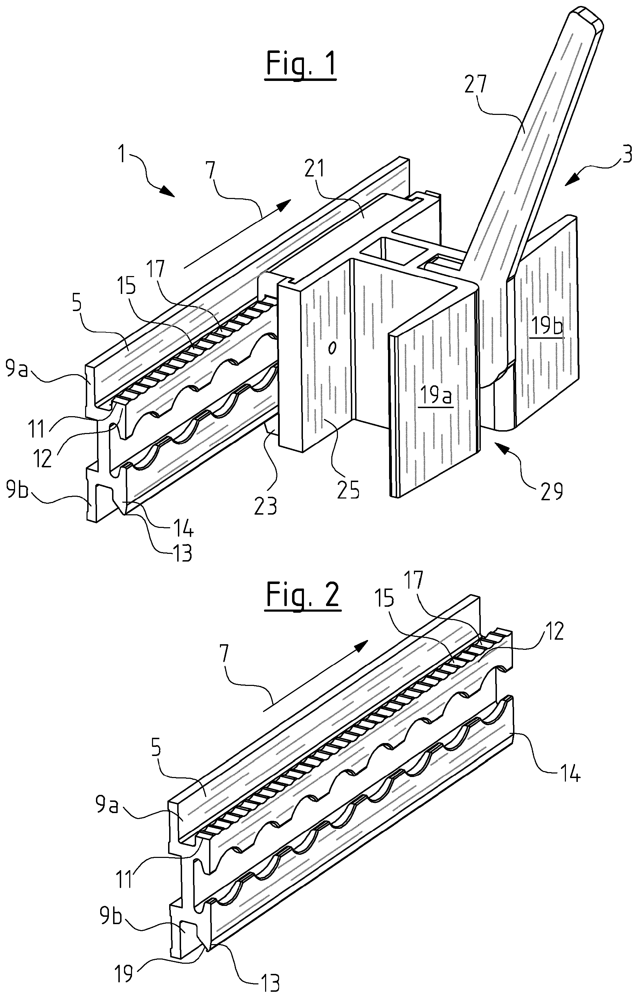

Figur 1 zeigt ein Ausführungsbeispiel eines Systems 1 mit einem Beschlag 3 und einer Sicherungsschiene 5, mittels derer Ladungsgüter auf einer Ladefläche eines Fahrzeugs festgelegt werden können. Die Sicherungsschiene 5 ist beispielsweise eine Airline-Zurrschiene, die zur Befestigung an einer Wand oder auf einer Ladefläche eines Fahrzeugs vorgesehen ist. Die Sicherungsschiene 5 erstreckt sich in einer Längsrichtung 7 und weist langgestreckte, flächige Füße auf, mit denen die Sicherungsschiene beispielsweise an einer Bordwand anliegen kann.

Daneben weist die Sicherungsschiene 5 eine erste Kante 11 auf, die an einer ersten Auskragung 12 ausgebildet ist, und eine zweite, an einer zweiten Auskragung 14 ausgebildete Kante 13 auf, mittels derer der Beschlag 3 an der Sicherungsschiene 5 befestigt wird. Beiden Kanten 11, 13 kann man besonders gut in Figur 2 erkennen, in der die Schiene 5 des Systems aus Figur 1 ohne Beschlag 3 dargestellt ist. Die erste Kante 11 und die zweite Kante 13 erstrecken sich parallel zu der Fläche, an der die Sicherungsschiene 5 befestigt wird. Wird die Sicherungsschiene 5 beispielsweise an einer Wand eines Fahrzeugs so befestigt, dass die Längsrichtung 7 parallel zur Ladefläche verläuft, weist die erste Auskragung 12, die die erste Kante 11 bildet, von der Ladefläche weg, während die zweite Kante 13, die von der zweiten Auskragung definiert wird, auf die Ladefläche zuweist. Die erste Kante 11 weist zudem eine Vielzahl von identischen Ausnehmungen 15 auf, von denen in den Figuren nur einige wenige mit Bezugszeichen gekennzeichnet sind, um die Darstellung nicht zu überfrachten. Die Ausnehmungen 15 bilden Positionierhilfen 17 und sind entlang der Längsrichtung 7 gleichmäßig über die erste Kante 11 der Sicherungsschiene 15 verteilt.

An der zweiten Kante 13 ist eine schienenseitige Anlagefläche 19 ausgebildet, die sich in einer Ebene erstreckt, die parallel zur Längsrichtung 7 der Sicherungsschiene 5 verläuft und gegenüber einer Fläche, an der die Sicherungsschiene 5 befestigt wird, um einen Winkel von 45* oder mehr, aber von weniger als 90° geneigt ist. Die Funktion der beschlagseitigen Anlagefläche wird nachfolgend bezugnehmend auf weitere Figuren näher erläutert.

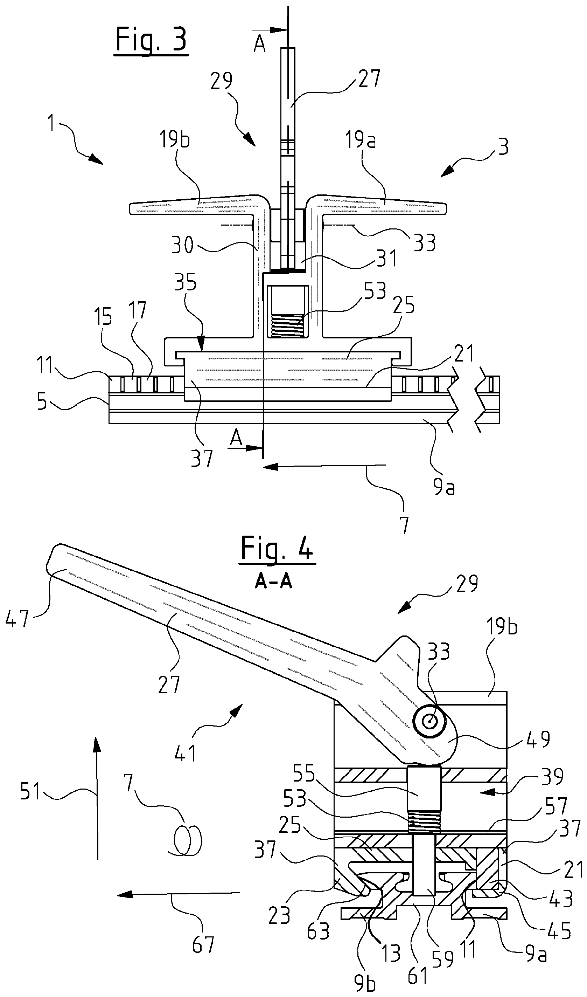

Der in Figur 1 gezeigte Beschlag 3 weist zwei auskragende Befestigungsmittel 19a, 19b auf, über die der Beschlag 3 mit einem Ladungsgut, wie beispielsweise einem Rollcontainer, verbunden werden kann. Des Weiteren weist der Beschlag 3 einen ersten Eingriffsabschnitt 21 und einen zweiten Eingriffsabschnitt 23 auf, die über einen Mittelabschnitt 25 raumfest miteinander verbunden sind, sodass der Abstand zwischen dem ersten Eingriffsabschnitt 21 und dem zweiten Eingriffsabschnitt 23 nicht verändert werden kann. Daneben ist in Figur 1 noch ein Hebel 27 einer Hebelordnung 29 zu erkennen, mittels dessen der Beschlag 3 an der Sicherungsschiene 5 festgelegt werden kann. Der Aufbau des Beschlags 3 wird nachfolgend bezugnehmend auf die Figuren 3 bis 6 näher erläutert.

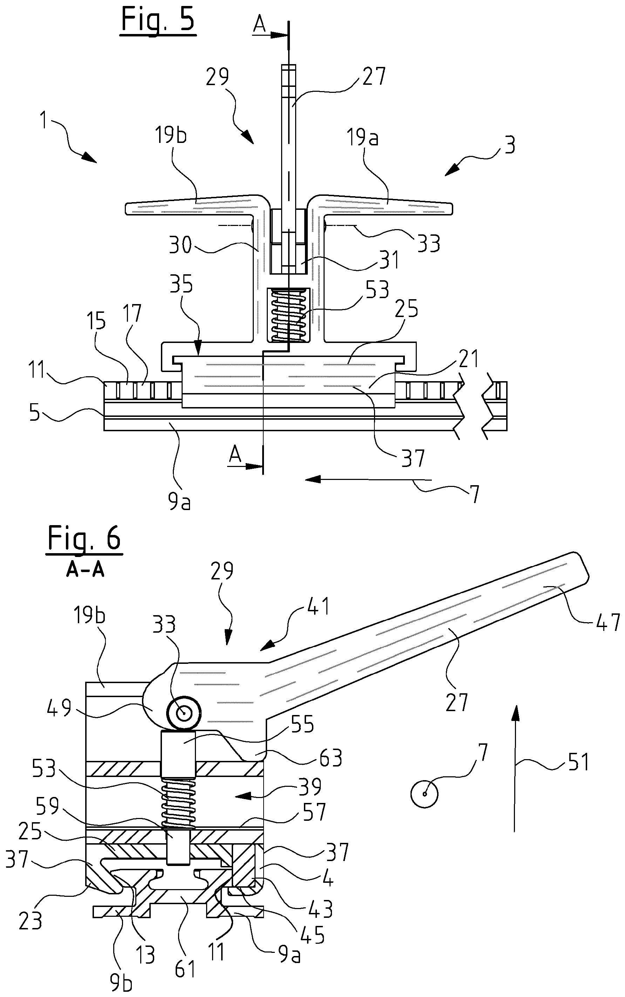

Die Figuren 3 und 5 zeigen jeweils eine Draufsicht auf das System 1 aus Figur 1, bei der so von oben auf das System 1 geblickt wird, dass von der Sicherungsschiene 5 nur die erste Kante 11 mit den die Positionierungshilfen bildenden Ausnehmungen 15 sowie einer der langgestreckten Füße 9a zu erkennen ist. Von den Ausnehmungen 15 ist nur eine mit einem Bezugszeichen gekennzeichnet worden. Die Darstellung des Systems 1 in den Figuren 3 und 5 unterscheidet sich darin, dass sich der Hebel 27 der Hebelanordnung 29, über die der Beschlag 3 an der Sicherungsschiene festgelegt werden kann, in Figur 3 in einer Schließstellung befindet, während er in Figur 5 in einer Öffnungsstellung ist.

Den Figuren 3 und 5 lässt sich weiterhin entnehmen, dass die Befestigungsmittel 19, 19b, mit denen der Beschlag 3 mit einem Ladegut verbunden werden kann, teil eines Grundkörpers 30 sind, der einstückig aus einem Strangprofil hergestellt ist. Dieses Strangprofil kann beispielsweise aus Aluminium sein und weist einen Zwischenraum 31 auf, in dem die Hebelanordnung 29 angeordnet ist. Wie man den Figuren 3 und 5 entnehmen kann, ist der Hebel 27 der Hebelanordnung 29 um eine Hebelachse 33 verschwenkbar an dem Grundkörper 30 gehaltert. Die Hebelachse 33 verläuft parallel zur Längsrichtung 7, wenn der Beschlag 3 mit der Sicherungsschiene 5 verbunden ist.

Weiter ist in den Figuren 3 und 5 zu erkennen, dass der Grundkörper 30 an seinem von den Befestigungsmitteln 19a, 19b wegweisenden Ende aufgeweitet ist und dort einen Einschub 35 aufweist, in den ein einstückig ausgebildeter Halteabschnitt 37 eingesetzt wurde, der den ersten Eingriffsabschnitt 21, den zweiten Eingriffsabschnitt 23 und den die beiden Eingriffsabschnitte 21, 23 verbindenden Mittelabschnitt 25 umfasst. In den Figure 3 und 5 sind der zweite Eingriffsabschnitt 23 und der Mittelabschnitt 25 nicht zu erkennen.

Der Aufbau des Halteabschnitts 37 ist in den Figuren 4 und 6 gezeigt, die jeweils einen Schnitt entlang der Linie A-A durch das System 1 aus den Figuren 3 bzw. 5 darstellen. Auch hier unterscheiden sich die Darstellungen in der Stellung des Hebels 27, der in Figur 4 in der Verschlussposition dargestellt ist und in Figur 6 in der Öffnungsposition, sowie der daraus resultierenden unterschiedlichen Positionierungen des Spannelements 39, das zusammen mit der Hebelanordnung 29 die Spanneinrichtung 41 bildet.

Wie man in den Figuren 4 und 6 an der Schraffierung erkennen kann, sind der erste Eingriffsabschnitt 21, der zweite Eingriffsabschnitt 23 und der Mitteilabschnitt 25 einstückig ausgebildet und in einer Aufnahme 35 in dem Grundkörper 30 des Beschlags 3 eingesetzt worden. Die Aufnahme 35 ist in den Figuren 4 und 6 nur eingeschränkt zu erkennen. Im Bereich des ersten Eingriffsabschnitts 21 ist in den Halteabschnitt 37 ein einen Vorsprung bildendes Positioniermittel 43 eingesetzt worden, das von einem Bolzen 43 gebildet wird. Dieser Bolzen 43 ist aus einem härteren Material gebildet als die erste Eingriffsabschnitt und hat eine den Ausnehmungen 15 entsprechende Form, sodass zwischen einer Ausnehmung 15 und dem Positioniermittel 43 ein Formschluss besteht, wenn das Positioniermittel 43 in der Ausnehmung platziert wird. Die beschlagseitige Anlagefläche 45 des ersten Eingriffsabschnitts 21, die an einer Rückseite der ersten Auskragung 12 anliegt, verläuft in einer Ebene, die sich parallel zur Längsrichtung 7 der Sicherungsschiene 5 erstreckt. In den Figuren 4 und 6 verläuft die Längsrichtung 7 in die Papierebene hinein.

Der um die Hebelachse 33 schwenkbare Hebel 27 weist an seinem von dem freien Hebelende 47 wegweisenden Ende eine exzentrisch geformte Endfläche 49 auf, die an einem von der Sicherungsschiene 5 wegweisenden Ende des bolzenförmigen Spannelements 39 anliegt. Wie man aus dem Vergleich der Figuren 4 und 6 entnehmen kann, wird beim Verschwenken des Hebels 7 aus der in Figur 6 gezeigten Öffnungsstellung in die in Figur 4 gezeigte Schließstellung durch den Eingriff der exzentrischen Endfläche 49 mit dem bolzenförmigen Spannelement 39 das Spannelement 39 entgegen einer Spannrichtung 51 auf die Sicherungsschiene 5 zubewegt. Dabei wird eine Spiralfeder 53 zusammengedrückt, wie man im Übrigen auch aus dem Vergleich der Figuren 3 und 5 erkennen kann. Die Spiralfeder 53 ist zwischen einem Kopf 55 des Spannelements 39 und einer Gegenfläche 57 des Grundkörpers 30 angeordnet.

Sobald das dem Kopf gegenüberliegende freie Ende 59 des Spannelements 39 an einem Mittelsteg 61 der Sicherungsschiene 5 anliegt, wird bei einem weiteren Verschwenken des Hebels 47 der Beschlag 3 in der Spannrichtung 51 von der Sicherungsschiene weggedrückt. Dabei greift eine im Hinblick auf die Spannrichtung 51 entlang einer geneigten Ebene verlaufende beschlagseitige Anlagefläche 63 an einer parallel verlaufenden schienenseitigen Anlagefläche 65 an, die an der zweiten Auskragung 14 ausgebildet ist, die die zweite Kante 13 bildet. Die beschlagseitige Anlagefläche 63 gleitet an der schienenseitigen Anlagefläche 65 entlang, wodurch der Beschlag 3 in einer sowohl senkrecht zur Spannrichtung 51 als auch senkrecht zur Erstreckungsrichtung 7 verlaufenden Verschieberichtung 67 verschoben wird. Durch das Verschieben in der Verschiebrichtung 67 wird das an dem ersten Eingriffsabschnitt 21 angeordnete Positioniermittel 43 in die gegenüberliegende Ausnehmung 15 bzw. die von dieser gebildete Positionierhilfe 17 hineingedrückt, wodurch der Formschluss gefestigt und der Beschlag 3 in Längsrichtung 7 fest an der Sicherungsschiene 5 positioniert wird. Durch den Eingriff der beschlagseitigen Anlageflächen 45 und 63 mit den Kanten 11, 13 der Sicherungsschiene 5 bzw. den Auskragungen 12, 14, die die Kanten 11, 13 begrenzen, wird der Beschlag 3 auch in Spannrichtung 51 fest mit der Sicherungsschiene 5 verbunden. Zudem umschießen die beiden Eingriffsabschnitte 21, 23 die Auskragungen 12, 14 derart, dass die Position des Beschlags 3 auch in der Verschieberichtung 67 festgelegt ist.

In Figur 6 ist, wie bereits erläutert, der Hebel 47 in der Öffnungsstellung dargestellt. Die maximale Öffnungsbewegung wird dabei durch einen Anschlag 69 begrenzt. Das Federmittel 53 sorgt dafür, dass während der Öffnungsbewegung das Spannelement 39 von dem Mittelsteg 61 der Sicherungsschiene 5 wegbewegt wird und der Beschlag damit von der Sicherungsschiene 5 gelöst wird.

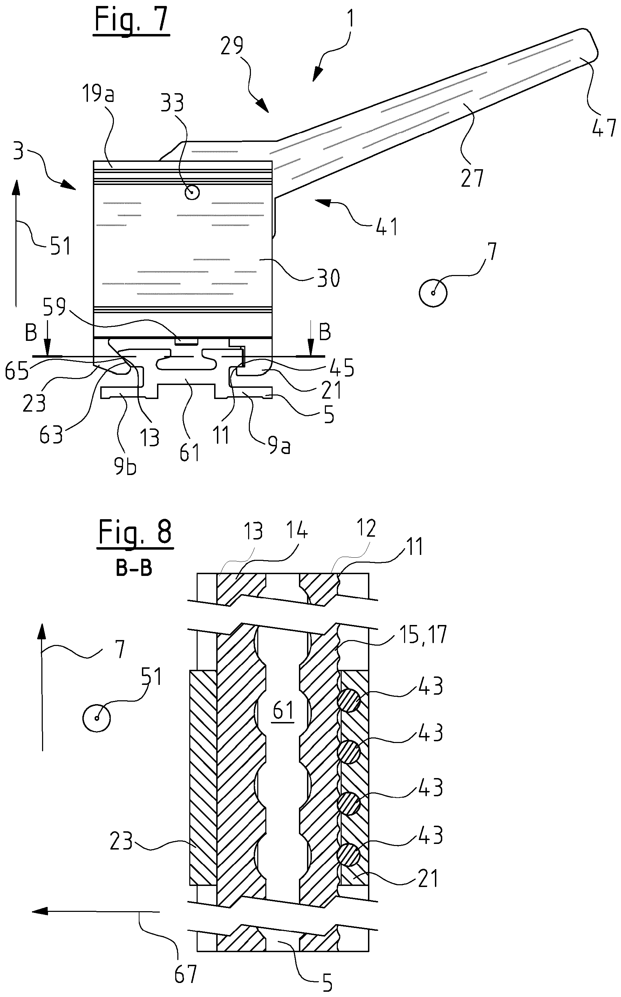

In den Figuren 7 und 8 ist eine seitliche Ansicht des Systems 1 aus Figur 1 dargestellt, wobei sich der Hebel 27 in der Öffnungsstellung befindet. Um unnötige Wiederholungen zu vermeiden, wird im Hinblick auf Figur 7 auf die vorhergehende Beschreibung des Systems 1 verwiesen.

Figur 8 zeigt einen Schnitt durch die Ansicht aus Figur 7 entlang der Linie B-B. Dabei ist deutlich zu erkennen, dass im ersten Eingriffsabschnitt 21 vier bolzenförmige Positionierungsmittel 43 angeordnet sind, von denen jedes mit einer Ausnehmung 15 an der ersten Kante 11 der Sicherungsschiene 5 eingreift. Durch die Mehrzahl der Positionierungsmittel 43 wird die einen Formschluss zwischen der Sicherungsschiene 5 und dem Beschlag 3 bildende Fläche vergrößert, sodass eine zuverlässigere Positionierung in der Längsrichtung 7 der Schiene erreicht wird.

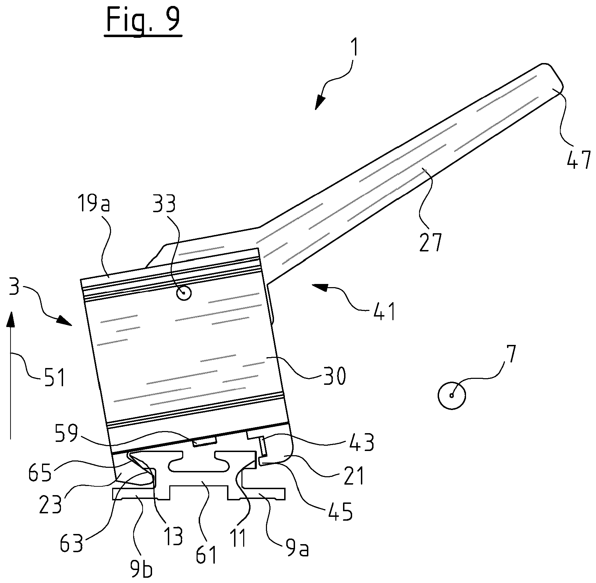

Schließlich ist in Figur 9 dargestellt, wie der Beschlag 3 mit der Sicherungsschiene 5 des Systems 1 verbunden werden kann. Auch hier befindet sich der Hebel 27 in der Öffnungsstellung. Durch die abgeschrägte beschlagseitige Anlagefläche 53 und die parallel verlaufende schienenseitige Anlagefläche 65 ist eine einfache Kupplung des Beschlags 3 mit der Schiene 5 möglich.

### Bezugszeichenliste

- 1: System
- 3: Beschlag
- 5: Sicherungsschiene
- 7: Längsrichtung
- 9a, 9b: Füße
- 11: erste Kante
- 12: erste Auskragung
- 13: zweite Kante
- 14: zweite Auskragung
- 15: Ausnehmungen
- 17: Positionierhilfe
- 19: Befestigungsmittel
- 21: erster Eingriffsabschnitt
- 23: zweiter Eingriffsabschnitt
- 25: Mittelabschnitt
- 27: Hebel
- 29: Hebelanordnung
- 30: Grundkörper
- 31: Zwischenraum
- 33: Hebelachse
- 35: Aufnahme
- 37: Halteabschnitt
- 39: Spannelement
- 41: Spanneinrichtung
- 43: Positioniermittel
- 45: beschlagseitige Anlagefläche
- 47: freies Ende des Hebels
- 49: exzentrische Endfläche des Hebels
- 51: Spannrichtung
- 53: Federelement
- 55: Kopf des Spannelements
- 57: Gegenfläche
- 59: freies Ende des Spannelements
- 61: Mittelsteg
- 63: beschlagseitige Anlagefläche
- 65: schienenseitige Anlagefläche
- 67: Verschieberichtung
- 69: Anschlag

## Patentansprüche

1. Beschlag (3) zum Festlegen von Ladungsstücken an einer Sicherungsschiene (5) auf einer Ladefläche eines Fahrzeugs, wobei die sich in einer Längsrichtung erstreckende Sicherungsschiene (5) eine erste Kante (11) und eine zweite Kante (13) aufweist, die parallel zur Längsrichtung (7) verlaufen,
wobei der Beschlag (3) dazu konfiguriert ist, mittels eines ersten Eingriffsabschnitts (21) an der ersten Kante (11) der Sicherungsschiene (5) einzugreifen und mittels eines zweiten Eingriffsabschnitts (23) an der zweiten Kante (12) der Sicherungsschiene (5) einzugreifen,
**dadurch gekennzeichnet, dass** der Beschlag (3) eine Spanneinrichtung (41) aufweist, die dazu konfiguriert ist, den Beschlag (3) senkrecht von der Sicherungsschiene (5) in einer Spannrichtung (51) weg derart zu spannen, dass durch den Eingriff des zweiten Eingriffsabschnitts (23) mit der zweiten Kante (13) der Sicherungsschiene (5) der erste Eingriffsabschnitt (21) senkrecht zur Spannrichtung (51) und zur Längsrichtung (7) auf die erste Kante (11) zu bewegt wird, so dass ein an dem ersten Eingriffsabschnitt (21) ausgebildetes Positioniermittel (43) in eine an der ersten Kante (11) ausgebildete Positionierhilfe (17) hineingedrückt wird, wodurch eine Position des Beschlags (3) an der Sicherungsschiene (5) in Längsrichtung (7) der Sicherungsschiene (5) formschlüssig festgelegt wird.

2. Beschlag (3) nach Anspruch 1, wobei das Positioniermittel (43) in Form eines Vorsprungs ausgebildet ist, der dazu vorgesehen ist, in eine korrespondierende Ausnehmung (15) an der ersten Kante (11) einzugreifen, die die Positionierhilfe (17) bildet.

3. Beschlag (3) nach Anspruch 1 oder 2, wobei zum Eingriff des zweiten Eingriffsabschnitt (23) mit der zweiten Kante (13) am zweiten Eingriffsabschnitt (23) eine beschlagseitige Anlagefläche ausgebildet ist, die sich in einer Ebene erstreckt, die parallel zur Längsrichtung (7) verläuft und unter einem Winkel von weniger als 90° zur Spannrichtung (51) geneigt ist.

4. Beschlag (3) nach einem der vorhergehenden Ansprüche, wobei die Spanneinrichtung (41) von einem Spannelement (39) gebildet wird, dass über eine Hebelanordnung (29) in Kontakt mit der Sicherungsschiene (5) gebracht werden kann, um den Beschlag (3) von der Sicherungsschiene (5) weg in der Spannrichtung (51) zu spannen.

5. Beschlag (3) nach Anspruch 4, wobei das Spannelement (39) von einem Bolzen gebildet wird, der bei einem Verschwenken eines Hebels (27) der Hebelanordnung (29) von eine Öffnungsstellung in eine Schließstellung durch einen Kontakt mit einer exzentrischen Oberfläche der Hebelanordnung (29) entgegen der Spannrichtung (51) auf die Sicherungsschiene (5) zu bewegt wird.

6. Beschlag (3) nach Anspruch 4 oder 5, wobei das Spannelement (39) mittels eines Federelements (53) in Spannrichtung (51) vorgespannt ist, sodass das Spannelement (39) von der Sicherungsschiene (5) wegbewegt wird, wenn der Hebel (27) der Hebelanordnung (29) von der Schließstellung in die Öffnungsstellung verschwenkt wird.

7. Beschlag (3) nach einem der vorhergehenden Ansprüche, wobei der erste Eingriffsabschnitt (21) zum Eingriff mit der ersten Kante (11) eine beschlagseitige Anlagefläche aufweist, die sich in einer senkrecht zur Spannrichtung (51) verlaufenden Ebene erstreckt.

8. Beschlag (3) nach einem der vorhergehenden Ansprüche, wobei der erste Eingriffsabschnitt (21) und der zweite Eingriffsabschnitt (23) über einen Mittelabschnitt (25) fest miteinander verbunden sind.

9. Beschlag (3) nach einem der vorhergehenden Ansprüche, wobei der erste Eingriffsabschnitt (21) eine Mehrzahl von Positioniermitteln (43) aufweist, die so ausgebildet sind, dass beim Spannen des Beschlags (3) in der Spannrichtung (51) sämtliche Positioniermittel (43) in korrespondierende Positionierhilfen (17) an der Sicherungsschiene (5) hineingedrückt werden.

10. System (1) aus einer Sicherungsschiene (5) und einem Beschlag (3) nach einem der vorgehenden Ansprüche, wobei die sich in einer Längsrichtung erstreckende Sicherungsschiene (5) eine erste Kante (11) und eine zweite Kante (13) aufweist, wobei die erste Kante (11) und die zweite Kante (13) parallel zur Längsrichtung (7) verlaufen.

11. System (1) nach Anspruch 10, wobei zum Eingriff des zweiten Eingriffsabschnitt (23) mit der zweiten Kante (13) der Sicherungsschiene (5) an der Sicherungsschiene eine schienenseitige Anlagefläche (65) ausgebildet ist, die parallel zur Längsrichtung (7) verläuft und unter einem Winkel von mehr als 90° zur Spannrichtung (51) geneigt ist.

12. System (1) nach Anspruch 11 mit einem Beschlag nach Anspruch 3, wobei die schienenseitige Anlagefläche (65) und die beschlagseitige Anlagefläche parallel zueinander verlaufen.

13. System (1) nach einem der Ansprüche 10 bis 12, wobei erste Kante (11) eine Vielzahl von Positionierungshilfen (17) aufweist, die vorzugsweise gleichmäßig voneinander beabstandet in der Längsrichtung (7) entlang der ersten Kante (11) ausgebildet sind.

## Claims

1. A fitting (3) for fixing load items to a securing rail (5) on a loading space of a vehicle, wherein the securing rail (5) extending in a longitudinal direction has a first edge (11) and a second edge (13), which run parallel to the longitudinal direction (7),
wherein the fitting (3) is configured to engage with the first edge (11) of the securing rail (5) by means of a first engagement portion (21) and to engage with the second edge (12) of the securing rail (5) by means of a second engagement portion (23),
**characterized in that** the fitting (3) has a clamping device (41) which is configured to clamp the fitting (3) perpendicularly away from the securing rail (5) in a clamping direction (51) in such a manner that by means of the engagement of the second engagement portion (23) with the second edge (13) of the securing rail (5), the first engagement portion (21) is moved perpendicular to the clamping direction (51) and to the longitudinal direction (7) towards the first edge (11) so that a positioning means (43) formed on the first engagement portion (21) is pressed into a positioning aid (17) formed on the first edge (11), thereby positively fixing a position of the fitting (3) on the securing rail (5) in the longitudinal direction (7) of the securing rail (5).

2. The fitting (3) according to claim 1, wherein the positioning means (43) is in the form of a projection which is provided to engage in a corresponding recess (15) on the first edge (11), which recess forms the positioning aid (17).

3. The fitting (3) according to claim 1 or 2, wherein for engagement of the second engagement portion (23) with the second edge (13) on the second engagement portion (23), a fitting-side contact surface is formed which extends in a plane which runs parallel to the longitudinal direction (7) and is inclined at an angle of less than 90° to the clamping direction (51).

4. The fitting (3) according to any one of the preceding claims, wherein the clamping device (41) is formed by a clamping element (39) that can be brought into contact with the securing rail (5) via a lever arrangement (29) in order to clamp the fitting (3) away from the securing rail (5) in the clamping direction (51).

5. The fitting (3) according to claim 4, wherein the clamping element (39) is formed by a bolt which, when pivoting a lever (27) of the lever arrangement (29) from an open position to a closed position, is moved counter to the clamping direction (51) towards the securing rail (5) by contact with an eccentric surface of the lever arrangement (29).

6. The fitting (3) according to claim 4 or 5, wherein the clamping element (39) is biased in the clamping direction (51) by means of a spring element (53) so that the clamping element (39) is moved away from the securing rail (5) when the lever (27) of the lever arrangement (29) is pivoted from the closed position into the open position.

7. The fitting (3) according to any one of the preceding claims, wherein for engagement with the first edge (11), the first engagement portion (21) has a fitting-side contact surface which extends in a plane running perpendicular to the clamping direction (51).

8. The fitting (3) according to any one of the preceding claims, wherein the first engagement portion (21) and the second engagement portion (23) are fixedly connected to each other via a center portion (25).

9. The fitting (3) according to any one of the preceding claims, wherein the first engagement portion (21) has a plurality of positioning means (43) which are formed in such a manner that, when clamping the fitting (3) in the clamping direction (51), all positioning means (43) are pressed into corresponding positioning aids (17) on the securing rail (5).

10. A system (1) made of a securing rail (5) and a fitting (3) according to any one of the preceding claims, wherein the securing rail (5) extending in a longitudinal direction has a first edge (11) and a second edge (13), wherein the first edge (11) and the second edge (13) run parallel to the longitudinal direction (7).

11. The system (1) according to claim 10, wherein for engagement of the second engagement portion (23) with the second edge (13) of the securing rail (5), a rail-side contact surface (65) is formed on the securing rail, which contact surface runs parallel to the longitudinal direction (7) and is inclined at an angle of more than 90° to the clamping direction (51).

12. The system (1) according to claim 11 with a fitting according to claim 3, wherein the rail-side contact surface (65) and the fitting-side contact surface run parallel to each other.

13. The system (1) according to any one of claims 10 to 12, wherein the first edge (11) has a multiplicity of positioning aids (17) which are preferably formed to be uniformly spaced apart from each other in the longitudinal direction (7) along the first edge (11).

## Revendications

1. Ferrure (3) destinée à la fixation d'éléments de charge sur un rail de sécurisation (5) sur une surface de chargement d'un véhicule, sachant que le rail de sécurisation (5) s'étendant dans un sens longitudinal comporte un premier bord (11) et un deuxième bord (13), qui passent parallèlement au sens longitudinal (7),
sachant que la ferrure (3) est configurée pour venir en prise sur le premier bord (11) du rail de sécurisation (5) au moyen d'une section d'engagement (21) et venir en prise sur le deuxième bord (12) du rail de sécurisation (5) au moyen d'une deuxième section d'engagement (23),
**caractérisée en ce que** la ferrure (3) comporte un dispositif de serrage (41), qui est configuré pour serrer la ferrure (3) perpendiculairement éloigné du rail de sécurisation (5) dans un sens de serrage (51) de telle manière que par l'engagement de la deuxième section d'engagement (23) avec le deuxième bord (13) du rail de sécurisation (5), la première section d'engagement (21) est déplacée sur le premier bord (11) perpendiculairement au sens de serrage (51) et au sens longitudinal (7) de telle sorte qu'un moyen de positionnement (43) constitué sur la premier section d'engagement (21) est enfoncé dans une assistance de positionnement (17) constituée sur le premier bord (11), une position de la ferrure (3) sur le rail de sécurisation (5) étant de ce fait définie par conformité de forme dans le sens longitudinal (7) du rail de sécurisation (5).

2. Ferrure (3) selon la revendication 1, sachant que le moyen de positionnement (43) est constitué sous la forme d'une saillie, qui est prévue pour venir en prise dans un évidement (15) correspondant sur le premier bord (11), qui forme l'assistance de positionnement (17).

3. Ferrure (3) selon la revendication 1 ou 2, sachant que pour l'engagement de la deuxième section d'engagement (23) avec le deuxième bord (13), une surface d'appui côté ferrure est constituée sur la deuxième section d'engagement (23), qui s'étend dans un plan, qui passe parallèlement au sens longitudinal (7) et est inclinée sous un angle inférieur à 90° par rapport au sens de serrage (51).

4. Ferrure (3) selon l'une quelconque des revendications précédentes, sachant que le dispositif de serrage (41) est formé par un élément de serrage (39) qui peut être mis en contact avec le rail de sécurisation (5) par un système de levier (29) pour serrer la ferrure (3) dans le sens de serrage (51) en éloignement du rail de sécurisation (5).

5. Ferrure (3) selon la revendication 4, sachant que l'élément de serrage (39) est formé par un axe qui est déplacé sur le rail de sécurisation (5) lors d'un pivotement d'un levier (27) du système de levier (29) d'une position d'ouverture à une position de fermeture par un contact avec une surface excentrique du système de levier (29) contrairement au sens de serrage (51).

6. Ferrure (3) selon la revendication 4 ou 5, sachant que l'élément de serrage (39) est précontraint dans le sens de serrage (51) au moyen d'un élément à ressort (53) de telle manière que l'élément de serrage (39) est éloigné du rail de sécurisation (5), lorsque le levier (27) du système de levier (29) est pivoté de la position de fermeture à la position d'ouverture.

7. Ferrure (3) selon une quelconque des revendications précédentes, sachant que la première section d'engagement (21) pour l'engagement avec le premier bord (11) comporte une surface d'appui côté ferrure, qui s'étend dans un plan passant perpendiculairement au sens de serrage (51).

8. Ferrure (3) selon l'une quelconque des revendications précédentes, sachant que la première section d'engagement (21) et la deuxième section d'engagement (23) sont fermement reliées l'une à l'autre par le biais d'une section centrale (25).

9. Ferrure (3) selon l'une quelconque des revendications précédentes, sachant que la première section d'engagement (21) comporte une pluralité de moyens de positionnement (43), qui sont constitués de telle manière que lors du serrage de la ferrure (3) dans le sens de serrage (51) tous les moyens de positionnement (43) sont enfoncés dans les assistances de positionnement (17) correspondantes sur le rail de sécurisation (5).

10. Système (1) composé d'un rail de sécurisation (5) et d'une ferrure (3) selon l'une quelconque des revendications précédentes, sachant que le rail de sécurisation (5) s'étendant dans un sens longitudinal comporte un premier bord (11) et un deuxième bord (13), sachant que le premier bord (11) et le deuxième bord (13) passent parallèlement au sens longitudinal (7).

11. Système (1) selon la revendication 10, sachant que pour l'engagement de la deuxième section d'engagement (23) avec le deuxième bord (13) du rail de sécurisation (5), une surface d'appui côté rail (65) est constituée sur le rail de sécurisation, qui passe parallèlement au sens longitudinal (7) et est inclinée sous un angle de plus de 90° par rapport au sens de serrage (51).

12. Système (1) selon la revendication 11 avec une ferrure selon la revendication 3, sachant que la surface d'appui côté rail (65) et la surface d'appui côté ferrure passent parallèlement l'une à l'autre.

13. Système (1) selon l'une quelconque des revendications 10 à 12, sachant que le premier bord (11) comporte une pluralité d'assistances de positionnement (17), qui sont constituées de préférence à distance régulière les unes des autres dans le sens longitudinale (7) le long du premier bord (11).
